# EUROPÄISCHE PATENTSCHRIFT

(11) **EP 1 400 402 B1**
(45) Veröffentlichungstag und Bekanntmachung des Hinweises auf die Patenterteilung: **19.08.2009**
(21) Anmeldenummer: 03013597.4
(22) Anmeldetag: 14.06.2003
(51) Int. Cl.: B60N 3/08, B60N 3/14

(54) **Einbauaschenbecher für ein Kraftfahrzeug**
Built-in ashtray for a motor vehicle
Cendrier intégré pour un véhicule automobile

(30) Priorität: 23.09.2002 DE 10244314
(43) Veröffentlichungstag der Anmeldung: 24.03.2004
(73) Patentinhaber: Dr. Ing. h.c. F. Porsche Aktiengesellschaft, 70435 Stuttgart (DE)
(72) Erfinder: Windorfer, Martin, 71254 Ditzingen (DE); Pandura, Michael, 74189 Weinsberg (DE); Kuhlmann, Rainer, 74321 Bietigheim-Bissingen (DE)

(56) Entgegenhaltungen:
- DE-A- 19 653 302
- PATENT ABSTRACTS OF JAPAN Bd. 017, Nr. 324 (M-1433), 21. Juni 1993 (1993-06-21) -& JP 05 038973 A (TOYOTA MOTOR CORP), 19. Februar 1993 (1993-02-19)

## Beschreibung

Die Erfindung betrifft einen Einbauaschenbecher für ein Kraftfahrzeug gemäß den Merkmalen des Oberbegriffs des Patentanspruchs 1.

Ein derartiger Einbauaschenbecher ist aus der DE 196 53 302 A1 bekannt. Der bekannte Einbauaschenbecher weist ein Gehäuse mit einer Führung auf, mit der ein Aschenbecher schubladenartig verschiebbar im Gehäuse gelagert ist. Der Aschenbecher weist ferner einen Halter für einen Zigarettenanzünder auf, der in eine vom Aschenbecher nach oben stehende Gebrauchsstellung bewegbar am Aschenbecher angebracht ist. Der Einbauaschenbecher ist mit einer Antriebseinrichtung versehen, die den Halter beim Verschieben des Aschenbechers aus dem Gehäuse heraus in die Gebrauchsstellung nach oben und beim Verschieben des Aschenbechers in das Gehäuse hinein nach unten bewegt. Darüber hinaus ist zwischen dem Gehäuse und einem hinteren Bereich des Aschenbechers eine Feder angeordnet, die den Aschenbecher nach Lösen einer Verriegelung von der eingefahrenen Schließstellung in eine ausgefahrene Gebrauchslage überführt.

Damit beim Einstecken des Zigarettenanzünders in den Halter kein selbsttätiges Einschieben des Aschenbechers in seine Schließstellung erfolgt, ist eine durch eine Kulissenführung gebildete Verriegelungsvorrichtung vorgesehen, die den Halter in seiner nach oben stehenden Gebrauchsstellung verriegelt.

Aufgabe der Erfindung ist es, an einem Einbauaschenbecher solche Vorkehrungen zu treffen, daß beim Einstecken des Zigarettenanzünders in den hochgeschwenkten Halter auch ohne spezielle Verriegelungsvorrichtung für den Halter ein selbsttätiges Einschieben des Aschenbechers in seine Schließstellung zuverlässig vermieden wird.

Erfindungsgemäß wird diese Aufgabe durch die Merkmale des Anspruchs 1 gelöst. Weitere die Erfindung in vorteilhafter Weise ausgestaltende Merkmale enthalten die Unteransprüche.

Die mit der Erfindung hauptsächlich erzielten Vorteile sind darin zu sehen, daß durch die Anordnung einer progressiven Feder zwischen Aschenbecher und Gehäuse ein selbsttätiges Einschieben des Aschenbechers in seine Schließstellung beim Einstecken des Zigarettenanzünders in den hochgeschwenkten Halter ohne Anordnung einer halterseitigen Verriegelungsvorrichtung vermieden wird. Als Feder wird vorzugsweise eine aus dünnen Federband gefertigte Band-Spiralfeder (Rollfeder) verwendet, wobei ein endseitiger Halteabschnitt der Band-Spiralfeder an einer unteren Gehäusewand festgelegt ist, während sich ein dem Halteabschnitt abgekehrter zusammengerollter Bereich an einer rückseitigen käfigartigen Aufnahme des Aschenbechers abstützt.

Die progressive Feder ist dermaßen ausgelegt, daß die auf den Aschenbecher in dessen ausgefahrener Gebrauchslage einwirkende, den Aschenbecher nach außen drückende Federkraft F_{F} größer ist als die beim Einstecken bzw. Betätigen des Zigarettenanzünders in der Ebene der Federkraft F_{F} wirkende, entgegengesetzt gerichtete Kraftkomponente F_{ZH} der Betätigungskraft F_{Z}.

Durch die progressive Auslegung der Feder ist am Anfang des Schließvorganges des Aschenbechers ein erhöhter Kraftaufwand erforderlich. Dadurch wird ein Wegklappen des Halters für den Zigarettenanzünder verhindert. Die progressive Auslegung der Feder wird entweder durch eine definiert unlineare Wicklung der Rollfeder erzielt, das heißt, in einem bestimmten Bereich wird die Feder stärker gewickelt (kleinerer Biegeradius) als in einem anderen Bereich.

Eine progressive Feder kann auch durch Ausstanzen der Feder innerhalb definierter Bereiche erfolgen. Die Federkraft wirkt dann nicht mehr über die gesamte Blechbandbreite.

Die Erfindung wird nachfolgend anhand eines in der Zeichnung dargestellten Ausführungsbeispiels näher erläutert. Es zeigen
- Fig. 1: eine perspektivische Darstellung eines Einbauaschenbechers in seiner herausgefahrenen Gebrauchslage,
- Fig. 2: einen Schnitt entlang der Linie II-II der Fig. 1 mit der ausgefahrenen Gebrauchslage des Aschenbechers,
- Fig. 3: einen Schnitt ähnlich Fig. 2 in Schließstellung des Aschenbechers,
- Fig. 4: eine perspektivische Ansicht von vorne auf das Gehäuse des Einbauaschenbechers mit der Feder,
- Fig. 5: eine perspektivische Ansicht von unten auf den Aschenbecher und die Feder, jedoch ohne Gehäuse,
- Fig. 6: ein Kraft-Weg-Diagramm der progressiv ausgebildeten Feder für den Einbauaschenbecher,
- Fig. 7: eine perspektivische Ansicht von schräg vorne auf den Einbauaschenbecher in Schließstellung,
- Fig. 8: eine Seitenansicht einer ersten Ausführungsform der progressiv ausgebildeten Feder,
- Fig. 9: eine Draufsicht auf eine zweite Ausführungsform der progressiv ausgebildeten Feder.

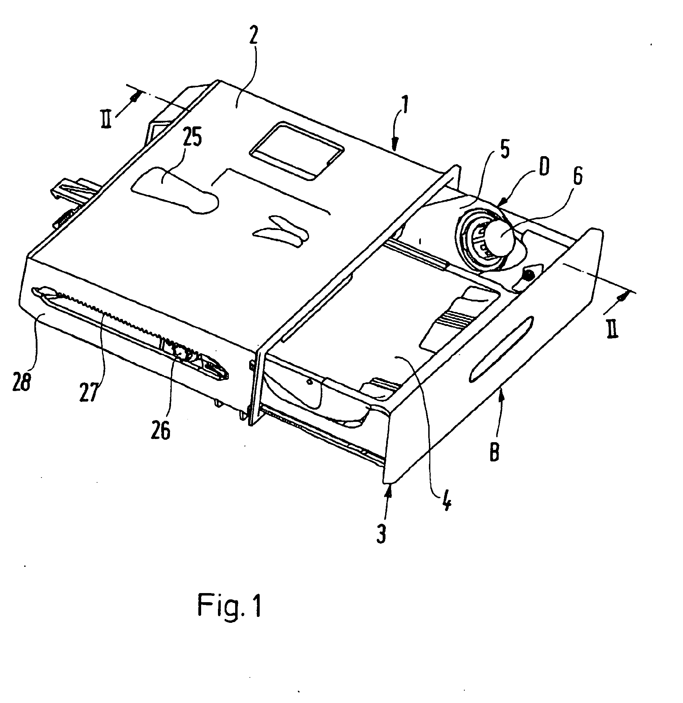

Der in Fig. 1 dargestellte, in eine Mittelkonsole oder ein Armaturenbrett eines Kraftfahrzeuges einbaubare Einbauaschenbecher 1 umfaßt ein Gehäuse 2, in dem ein kastenförmiger Aschenbecher 3 schubladenartig verschiebbar ist. Der Aschenbecher wirkt über Führungen mit dem Gehäuse 2 zusammen. Gemäß Fig. 1 weist der Aschenbecher 3 ein Aschefach 4 auf, das herausnehmbar ausgebildet ist. Seitlich neben dem Aschefach 4 ist am Aschenbecher 3 ein Halter 5 für einen in ihn eingesteckten Zigarettenanzünder 6 schwenkbar gelagert.

Der Aschenbecher 3 ist von einer eingefahrenen Schließstellung A in eine ausgefahrene Gebrauchslage B bewegbar und umgekehrt. Beim Herausverschieben des Aschenbechers 3 aus dem Gehäuse 2 wird der Halter 5 für den Zigarettenanzünder 6 zwangsweise aus einer in den Aschenbecher 3 versenkten Grundstellung C in eine vom Aschenbecher 3 schräg nach oben stehende Gebrauchsstellung D verschwenkt. Beim Hineinschieben des Aschenbechers 3 in das Gehäuse 2 wird der Halter 5 für den Zigarettenanzünder 6 zwangsweise von der schräg nach oben stehenden Gebrauchsstellung D nach unten in die versenkte Grundstellung C bewegt.

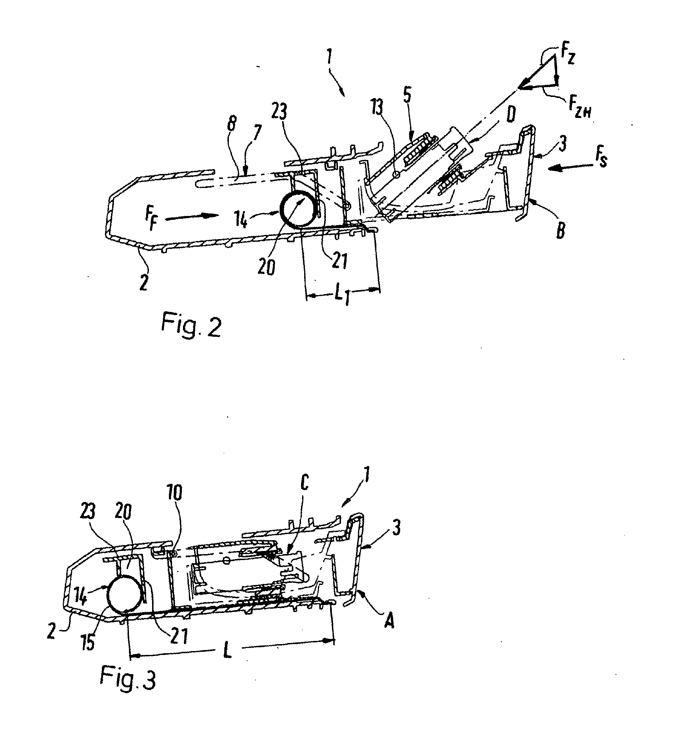

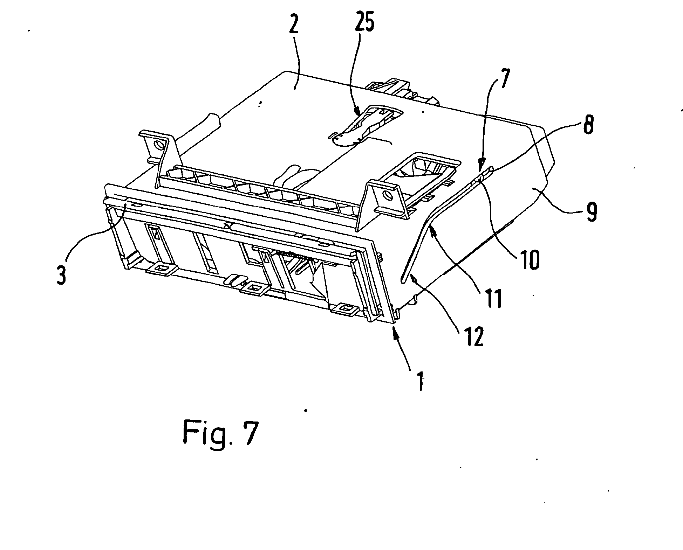

Zum zwangsweisen Verschwenken des Halters 5 in Abhängigkeit von der Stellung des Aschenbechers 3 ist eine Antriebseinrichtung vorgesehen, die im Ausführungsbeispiel als Kulissenführung 7 ausgebildet ist. Die Kulissenführung 7 weist eine Kulissenbahn 8 in Form eines Schlitzes in einer Seitenwand 9 des Gehäuses 2 auf, in die ein mit dem Halter 5 einstückiger an dessen hinteren Ende seitlich abgestellter Kulissenzapfen 10 eingreift (Fig. 7). Die Kulissenbahn 8 verläuft im wesentlichen in Verschieberichtung des Aschenbechers 3 in der Seitenwand 9 des Gehäuses 2 von hinten nach vorn. In ihrem Mittelbereich 11 ist die Kulissenbahn 8 abgewinkelt, in ihrem vorderen Bereich 12 verläuft sie schräg nach vorn unten. Beim Verschieben des Aschenbechers 3 aus der in Fig. 3 dargestellten Schließstellung A in die in Fig. 2 gezeigte Gebrauchslage B bewegt sich der Kulissenzapfen 10 des Halters 5 in der Kulissenbahn 8. Dabei wird der Kulissenzapfen 10 im vorderen schräg nach unten verlaufenden Bereich 12 der Kurvenbahn 8 nach unten bewegt. Der Halter 5 verschwenkt um seine querverlaufende, etwa horizontal ausgerichtete Drehachse 13, ein hinterer Teil des Halters 5 bewegt sich nach unten und sein vorderer den Zigarettenanzünder 6 enthaltender Teil verschwenkt in die vom Aschenbecher 3 schräg nach oben stehende Gebrauchsstellung D (Fig. 2).

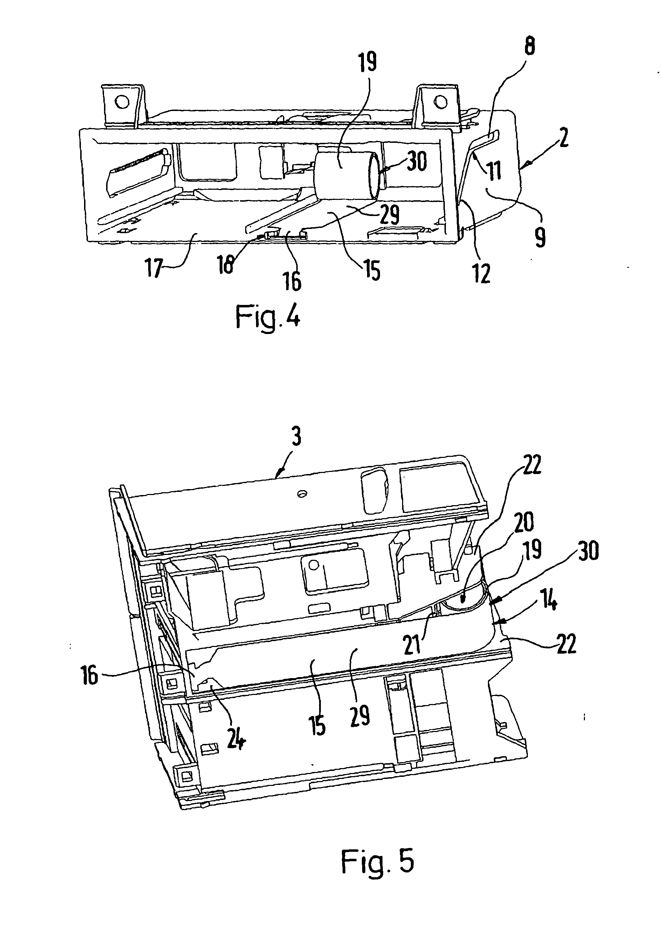

Zur Unterstützung der Öffnungsbewegung des Aschenbechers 3 ist eine Feder 14 vorgesehen, die einerseits mit dem Gehäuse 2 und andererseits mit dem Aschenbecher 3 in Wirkverbindung steht. Im Ausführungsbeispiel ist die Feder 14 als Band-Spiralfeder 15 ausgebildet. Ein endseitiger abgewinkelter Halteabschnitt 16 der Band-Spiralfeder 14 ist an einer am vorderen Randbereich einer unteren Gehäusewand 17 ausgebildeten Aufnahme 18 eingehängt (Fig. 4). An den abgewinkelten, etwa T-förmigen Halteabschnitt 16 schließen sich mehrere aufgerollte Wicklungen 19 der Bandspiralfeder 15 an, wobei die Wicklungen 19 mit einer rückseitigen, käfigartigen Aufnahme 20 des Aschenbechers 3 abstützend zusammenwirken. Die käfigartige Aufnahme 20 wird durch eine hintere querverlaufende Begrenzungswand 21, durch zwei längsverlaufende seitliche Wände 22 und eine mit nach unten ragenden Versteifungsrippen versehene obere Begrenzungswand 23 gebildet. Die beiden seitlichen Wände 22 dienen als Führung der Band-Spiralfeder 15 in Fahrzeugquerrichtung. An der Unterseite des Aschenbechers 3 ist angrenzend an die Aufnahme 20 eine vertiefte Führungsbahn 24 für die Band-Spiralfeder 15 ausgebildet (Fig. 5). Die sich in Fahrzeuglängsrichtung erstreckende aus Federstahl gefertigte Band-Spiralfeder 15 verläuft zwischen der Oberseite der unteren Gehäusewand 17 und der Unterseite des schubladenartigen Aschenbechers 3 und weist eine geringe Wanddicke auf. Im Anlieferungszustand ist die Band-Spiralfeder 15 völlig aufgerollt, lediglich der endseitige T-förmige Halteabschnitt 16 steht von den drei bis vier zusammengerollten Wicklungen 19 ab (nicht näher dargestellt).

In Schließstellung A des Aschenbechers 3 weist die Band-Spiralfeder 15 einen relativ langen gestreckten Bereich (Länge L) und relativ wenige Wicklungen 19 auf (Fig. 3). In der herausgefahrenen Gebrauchslage B hingegen ist der gestreckte Bereich relativ kurz (Länge L1) und die Band-Spiralfeder 15 weist dafür mehrere Wicklungen 19 auf (Fig. 2). Der Aschenbecher 3 ist über eine bekannte, nicht näher beschriebene Herzkurvensteuerung 25 in seiner Schließstellung A fixiert. Durch kurzes Eindrücken des Aschenbechers 3 in das Gehäuse 2 wird der Aschenbecher 3 entriegelt und die Band-Spiralfeder 15 überführt den Aschenbecher 3 in seine herausgefahrene Gebrauchslage B. Die Verschiebebewegung des Aschenbechers 3 wird von einem Rotationsdämpfungselement 26 gedämpft, das seitlich am Aschenbecher 3 angebracht ist und dessen Zahnrad mit einer Zahnstange 27 in einer zweiten Seitenwand 28 des Gehäuses 3 kämmt (Fig. 1).

Erfindungsgemäß ist vorgesehen, daß die Feder 14 eine progressive Federkennlinie aufweist, dergestalt, daß die auf den Aschenbecher 3 in dessen ausgefahrener Gebrauchslage B einwirkende, den Aschenbecher 3 nach außen drückende Federkraft F_{F} größer ist als die beim Einstecken bzw. Betätigen des Zigarettenanzünders 6 in der Ebene der Federkraft F_{F} wirkende, entgegengesetzt gerichtete Kraftkomponente F_{ZH} der Betätigungskraft F_{Z}. Ferner ist die auf den Aschenbecher 3 einwirkende Federkraft F_{F} anfänglich aus einer Gebrauchslage B heraus größer, als während der nachfolgenden Bewegung des Aschenbechers 3 in die Schließstellung A. Dadurch wird sichergestellt, daß beim Einstecken bzw. Betätigen des Zigarettenanzünders 6, also bei einem Druck gegen den Halter 5, egal in welche Richtung, der Aschenbecher 3 nicht selbsttätig in seine eingefahrene Schließstellung A bewegt wird.

Eine derartige progressive Federkennlinie wird im Ausführungsbeispiel dadurch erzielt, daß der dem eingehängten Halteabschnitt 16 zugekehrte Bereich 29 der Band-Spiralfeder 15 stärker gekrümmt ist, das heißt einen kleineren Biegeradius aufweist als der nachfolgende Bereich 30 der Band-Spiralfeder 15.

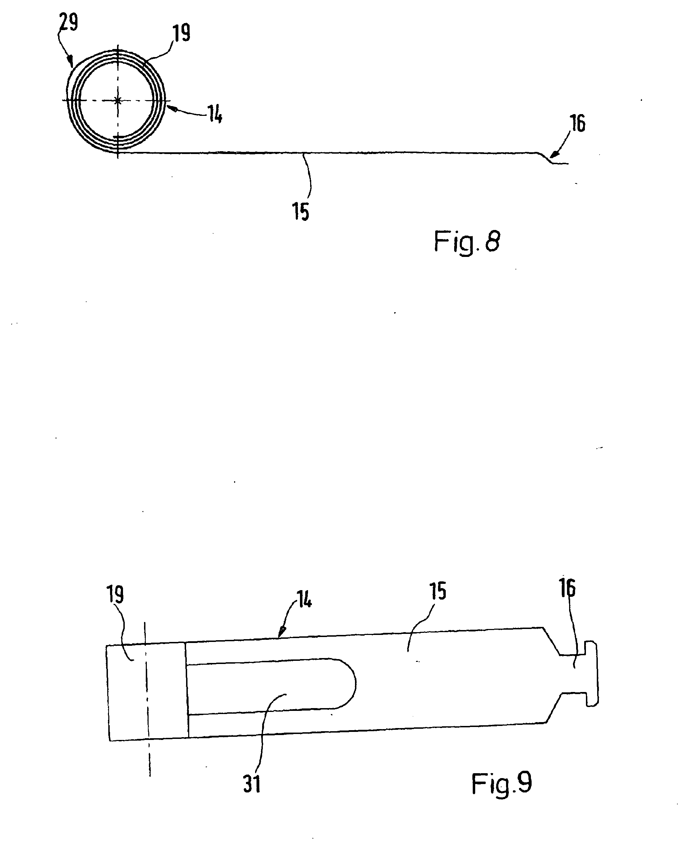

Eine progressive Auslegung der etwa 15 bis 30 mm breiten und dünnwandigen Band-Spiralfeder 15 läßt sich auch dadurch erzielen, daß die Band-Spiralfeder 15 innerhalb definierter Bereiche mit zumindest einer Ausstanzung 31 versehen ist (Fig. 9). Die Federkraft wirkt dann nicht mehr über die gesamte Blechbandbreite.

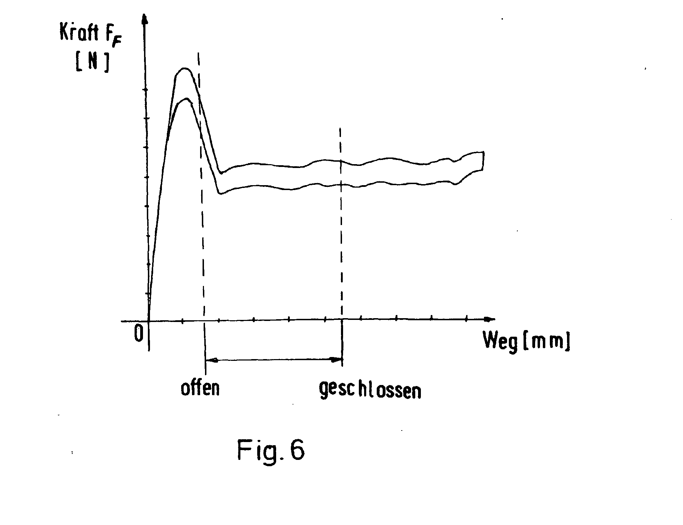

Das in Fig. 6 dargestellte Kraft-Weg-Diagramm zeigt, daß bei geöffnetem Aschenbecher 3 bedingt durch die Band-Spiralfeder 15 eine relativ hohe Kraft F_{F} auf den Aschenbecher 3 in Öffnungsrichtung wirkt, das heißt, es muß eine relativ hohe Gegenkraft als Schließkraft F_{S} aufgebracht werden, um den Aschenbecher 3 in seine Schließstellung A zu verschieben. Nach einem definierten Weg (ca. 20 - 30 mm) des Aschenbechers 3 in Richtung Schließstellung A verringert sich die von der progressiven Band-Spiralfeder 15 aufgebrachte Kraft F_{F} auf den Aschenbecher 3, das heißt, auch die Schließkraft F_{S} nimmt dann deutlich ab.

## Patentansprüche

1. Einbauaschenbecher für ein Kraftfahrzeug, mit einem Gehäuse, das eine Führung aufweist, mit der ein Aschenbecher schubladenartig verschiebbar im Gehäuse gelagert ist, und mit einem Halter für einen Zigarettenanzünder, der in eine vom Aschenbecher nach oben stehende Gebrauchsstellung bewegbar am Aschenbecher angebracht ist, wobei der Einbauaschenbecher eine Antriebseinrichtung aufweist, die den Halter beim Verschieben des Aschenbechers aus dem Gehäuse heraus in die Gebrauchsstellung nach oben und beim Verschieben des Aschenbechers in das Gehäuse hinein nach unten bewegt, und daß zwischen dem Gehäuse und einem hinteren Bereich des Aschenbechers eine Feder angeordnet ist, die den Aschenbecher nach Lösen einer Verriegelung von einer eingefahrenen Schließstellung in eine ausgefahrene Gebrauchslage überführt, **dadurch gekennzeichnet, daß** die Feder (14) eine progressive Federkennlinie aufweist, dergestalt, daß die auf den Aschenbecher (3) in dessen ausgefahrener Gebrauchslage (B) einwirkende, den Aschenbecher (3) nach außen drückende Federkraft (F_{F}) größer ist als die beim Einstecken bzw. Betätigen des Zigarettenanzünders (6) in der Ebene der Federkraft (F_{F}) wirkende, entgegengesetzt gerichtete Kraftkomponente (F_{ZH}) der Betätigungskraft (F_{Z}).

2. Einbauaschenbecher nach Anspruch 1, **dadurch gekennzeichnet, daß** die auf den Aschenbecher (3) einwirkende Federkraft (F_{F}) anfänglich aus einer Gebrauchslage (B) heraus größer ist als während der nachfolgenden Bewegung des Aschenbechers (3) in die Schließstellung (A).

3. Einbauaschenbecher nach Anspruch 1, **dadurch gekennzeichnet, daß** die Feder (14) durch eine aus dünnem Federband gefertigte Band-Spiralfeder (15) gebildet wird, wobei ein endseitiger Halteabschnitt (16) der Band-Spiralfeder (15) an einer unteren Gehäusewand (17) festgelegt ist, wogegen sich ein dem Halteabschnitt (16) abgekehrter zusammengerollter Bereich mit Wicklungen (19) an einer rückseitigen käfigartigen Aufnahme (20) des Aschenbechers (3) abstützt.

4. Einbauaschenbecher nach einem der vorangegangenen Ansprüche, **dadurch gekennzeichnet, daß** der dem endseitigen Halteabschnitt (16) zugewandte Bereich (29) der Band-Spiralfeder (15) stärker gekrümmt ist, das heißt, einen kleineren Biegeradius aufweist, als der nachfolgende Bereich (30) der Band-Spiralfeder (15).

5. Einbauaschenbecher nach einem der vorangegangenen Ansprüche, **dadurch gekennzeichnet, daß** der dem endseitigen Halteabschnitt (16) abgekehrte Bereich der Band-Spiralfeder (15) mit zumindest einer Ausstanzung (31) versehen ist.

## Claims

1. Built-in ashtray for a motor vehicle, having a housing which has a guide, by way of which an ashtray is mounted in the housing such that it can be displaced in the manner of a drawer, and having a holder for a cigarette lighter which is attached to the ashtray such that it can be moved into a use position which protrudes upwards from the ashtray, the built-in ashtray having a drive device which, when the ashtray is displaced out of the housing into the use position, moves the holder upwards and, when the ashtray is displaced downwards into the housing, moves the holder downwards, and a spring being arranged between the housing and a rear region of the ashtray, which spring transfers the ashtray from a retracted closed position into an extended use position after a locking means has been released, **characterized in that** the spring (14) has a progressive spring characteristic diagram of such a kind that the spring force (F_{F}) which acts on the ashtray (3) in its extended use position (B) and presses the ashtray (3) outwards is greater than that force component (F_{ZH}) of the actuating force (F_{Z}) which is directed in the opposite direction and acts in the plane of the spring force (F_{F}) during insertion or actuation of the cigarette lighter (6).

2. Built-in ashtray according to Claim 1,
**characterized in that** the spring force (F_{F}) which acts on the ashtray (3) is greater initially out of a use position (B) than during the following movement of the ashtray (3) into the closed position (A).

3. Built-in ashtray according to Claim 1,
**characterized in that** the spring (14) is formed by a spiral band spring (15) which is manufactured from thin spring band, an end-side holding section (16) of the spiral band spring (15) being fixed to a lower housing wall (17), whereas a rolled-together region which faces away from the holding section (16) is supported by way of windings (19) on a rear-side cage-like receptacle (20) of the ashtray (3).

4. Built-in ashtray according to one of the preceding claims, **characterized in that that** region (29) of the spiral band spring (15) which faces the end-side holding section (16) is curved to a more pronounced extent, that is to say has a smaller bending radius, than the following region (30) of the spiral band spring (15).

5. Built-in ashtray according to one of the preceding claims, **characterized in that that** region of the spiral band spring (15) which faces away from the end-side holding section (16) is provided with at least one stamped-out portion (31).

## Revendications

1. Cendrier intégré pour un véhicule automobile, avec un boîtier qui présente un guide, à l'aide duquel un cendrier peut être monté dans le boîtier de façon coulissante à la manière d'un tiroir, et avec un support pour un allume-cigare, qui est installé sur le cendrier de façon mobile dans une position d'utilisation relevée par rapport au cendrier, dans lequel le cendrier intégré comprend un dispositif d'entraînement qui déplace le support vers le haut dans la position d'utilisation lors du déplacement du cendrier vers l'extérieur du boîtier et le déplace vers le bas lors du déplacement du cendrier vers l'intérieur du boîtier, et il se trouve, entre le boîtier et une zone arrière du cendrier, un ressort qui transfère le cendrier de la position de fermeture rentrée à une position d'utilisation sortie, après libération d'un verrouillage, **caractérisé en ce que** le ressort (14) présente une courbe caractéristique de ressort progressive, de telle manière que la force de ressort (F_{F}) poussant le cendrier (3) vers l'extérieur, agissant sur le cendrier (3) dans sa position d'utilisation sortie (B), soit plus élevée que la composante de force (F_{ZH}) de la force d'actionnement (F_{Z}) orientée en sens contraire et agissant dans le plan de la force de ressort (F_{F}) lors de l'enfoncement ou de l'utilisation de l'allume-cigare (6).

2. Cendrier intégré selon la revendication 1,
**caractérisé en ce que** la force de ressort (F_{F}) agissant sur le cendrier (3) initialement à partir de la position d'utilisation (B) est plus élevée que pendant le mouvement ultérieur du cendrier (3) vers la position de fermeture (A).

3. Cendrier intégré selon la revendication 1,
**caractérisé en ce que** le ressort (14) est formé par un ressort spiral en bande (15) fabriqué à partir d'une mince bande de ressort, dans lequel une partie de maintien d'extrémité (16) du ressort spiral en bande (15) est fixée à une paroi inférieure (17) du boîtier, tandis qu'une région enroulée, opposée à la partie de maintien (16), s'appuie par des spires (19) sur un logement (20) du cendrier (3) réalisé en forme de cage du côté arrière.

4. Cendrier intégré selon l'une quelconque des revendications précédentes, **caractérisé en ce que** la région (29) du ressort spiral en bande (15) tournée vers la partie de maintien d'extrémité (16), est courbée plus fortement, c'est-à-dire présente un rayon de courbure plus petit que la région suivante (30) du ressort spiral en bande (15).

5. Cendrier intégré selon l'une quelconque des revendications précédentes, **caractérisé en ce que** la région du ressort spiral en bande (15) située à l'opposé de la partie de maintien d'extrémité (16) est pourvue d'au moins une découpe estampée (31).
